Europäisches Patentamt

European Patent Office

Office européen des brevets

(19)

(11) Publication number : **0 596 650 A1**

(12) **EUROPEAN PATENT APPLICATION**

(21) Application number : 93308570.6

(22) Date of filing : 27.10.93

(51) Int. Cl.$^5$ : **H04L 12/44, H04L 12/64, H04J 3/06**

(30) Priority : **02.11.92 US 969917**

(43) Date of publication of application :
**11.05.94 Bulletin 94/19**

(84) Designated Contracting States :
**DE FR GB IT NL**

(71) Applicant : **NATIONAL SEMICONDUCTOR CORPORATION**
**2900 Semiconductor Drive P.O. Box 58090**
**Santa Clara California 95051-8090 (US)**

(72) Inventor : **Edem, Brian C.**
**1058 Happy Valley Avenue**
**San Jose, California 95129 (US)**
Inventor : **Evans, Michael S.**
**1966 Cape Hilda Place**
**San Jose, California 95133 (US)**
Inventor : **Worlsey, Debra J.**
**224-G East Red Oak Drive**
**Sunnyvale, California 94086 (US)**

(74) Representative : **Horton, Andrew Robert Grant et al**
**BOWLES HORTON Felden House Dower Mews High Street**
**Berkhamsted Hertfordshire HP4 2BL (GB)**

(54) **Apparatus & method for accommodating cable length delays using isochronous fifoing.**

(57)    A data communication system, such as a local area network, is provided with a capability of transmitting isochronous data. The system conveys both isochronous data and non-isochronous data by time-multiplexing the data into a recurring frame structure on a four-bit nibble basis. The arriving data is de-multiplexed at the hub into separate channels for handling the separate streams by appropriate hardware.

To compensate for skew between data transmitted and data received by the hub, a buffer is used in the hub's received data stream to accurately align the data cycles.

Fig 12

EP 0 596 650 A1

The present invention relates to a data communication network, such as a local area network or wide area network, and in particular to a network for transferring isochronous data.

## BACKGROUND OF THE INVENTION

Isochronous data can generally be described as data which is non-packetized and of indeterminate, potentially continuous duration. Examples of isochronous data sources include video cameras, which output a substantially continuous stream of data representing images and associated sounds, and telephones, which output a substantially continuous stream of voice data. An example of an isochronous data sink is a video monitor which receives a substantially continuous stream of video data for display.

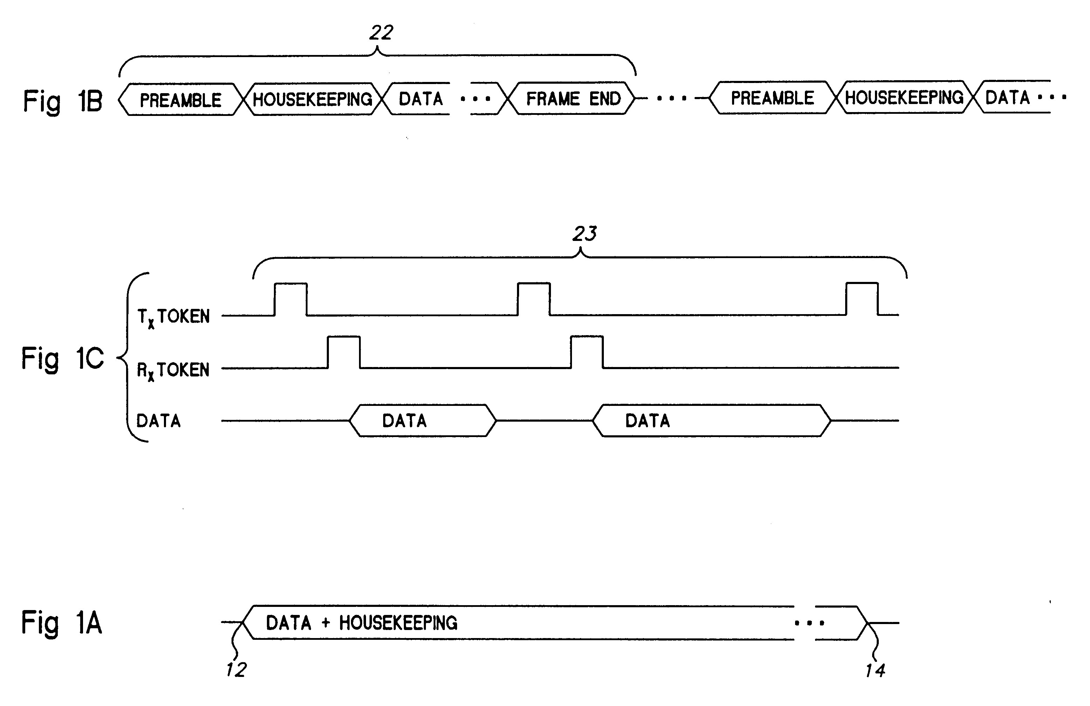

Fig. 1A schematically depicts isochronous plus non-isochronous data transfer connection. The data transfer is first initiated, such as by initiating a telephone conversation or beginning a video camera transmission 12. After initiating the data transfer, transmission of the data is provided substantially continuously for an indeterminate period, until termination of the telephone conversation or video transmission 14. Every bit transferred need not necessarily represent a data bit. "Housekeeping" bits to control destination and timing may be also transferred. Furthermore, the data being transferred may comprise "Null" data such as silence during a telephone conversation or transfer of a blank video image. One type of isochronous data transfer is the Fiber Distributed Data Interface-II (FDDI-II) as described, for example, in FDDI-II Hybrid Multiplexer, Revision 2.4, dated March 25, 1991.

The increasing availability of multi-media computers and work stations that include isochronous data sources and sinks in addition to non-isochronous sources and sinks has increased interest in the transfer of isochronous data in a network environment. Many existing networks use non-isochronous data communications between stations on the network. Commonly used data transfer protocols include packet transfer systems and token ring systems.

An example of packetized data transfer is the commonly-used ethernet system. One implementation known as 10BASE-T is described in the draft Nine supplement to IEEE standard 802.3, dated November 15, 1989. Fig. 1B shows a packet transfer 22.

In a token ring system, a node transfers data only upon receipt of an electronic token. One commonly used token ring system is described in IEEE standard 802.5 Fig. 1C shows a data transfer 23 in a token ring system.

Many previous attempts to accommodate isochronous data on these existing data networks result in disadvantageous operating characteristics. In some systems, the bandwidth available for a given isochronous source or sink degrades in direct proportion to the total number of isochronous data sources and sinks transmitting and receiving on the network.

The conventional method for correcting skew provides three levels of cycle buffering for data received from the node at a hub. One buffer loads data currently being received from the node. A second buffer stores data previously received from the node. A third buffer downloads data previously received from the node for further processing by the hub. This buffering scheme consumes a great deal of memory space.

In addition, existing isochronous systems also provide little or no compatibility with previous networks. This incompatibility necessitates extensive replacement of hardware or software to accommodate both isochronous and non-isochronous traffic. Thus a multi-media PC having ethernet capabilities and a video camera cannot simultaneously utilize both the isochronous and non-isochronous source/sinks.

## SUMMARY OF THE INVENTION

Copending application Serial No.                    , Attorney Docket No. 8332-314/NS-2023, titled "Network for Data Communication with Isochronous Capability" filed the same day herewith, and incorporated by reference, describes a system that provides for communication of data to and from isochronous data sources and sinks. The bandwidth available to an isochronous source/sink is independent of changes in isochronous demand on the network. Furthermore, each source/sink is guaranteed an isochronous bandwidth which is independent of changes of source/sink bandwidth demands on the network. The isochronous communication system also maintains a high degree of compatibility with previous, often in-place, systems, thus requiring only minimal replacement of hardware/software.

The system is implemented as a star-topology network with data sources transmitting to a central hub which, in turn, transmits the data to data sinks. Several such star-topology systems can be connected by interconnection of the hubs, for example, in a ring structure. Multiplexed data arriving at the hub is de-multiplexed to separate the isochronous-source data, the non-isochronous-source data and D channel and M channel information. The non-isochronous-source data can be provided to hub circuitry specialized for handling the non-isochronous data stream. Preferably, circuitry in the hub converts the separated non-isochronous data stream into a form substantially similar to the form available over previous non-isochronous networks. For example, where non-isochronous data is sourced from an ethernet MAC, the hub converts the separated non-isochronous data to a form handled by standard ethernet hub repeater circuitry.

According to one embodiment of the present invention, skew caused by the cable length of the bidirectional links is accounted for by a delay circuit and buffer. Data arriving at the hub is timed to finish filling a buffer at the same time a second buffer is emptied by the switch logic for further processing by the hub. In this fashion, only two buffers are needed and an entire buffer required in prior art designs eliminated.

According to another embodiment of the present invention, the cycle start in the node is timed by inserting a delay of a fixed duration. The delay ensures that the cycle start transmitted by the node and received by the hub arrives slightly sooner than the next cycle time transmitted from the hub. A small FIFO is inserted in the hub data stream to accurately align the cycles.

According to yet another embodiment of the present invention, a small FIFO is inserted in the node. The node FIFO is used to hold data to be transmitted to the hub for a duration sufficient to synchronize the transmitted data with the received cycle reference.

## BRIEF DESCRIPTION OF THE DRAWINGS

Fig. 1A is a timing chart of an isochronous data frame transmission;
Fig. 1B is a timing chart for a packetized data transmission;
Fig. 1C is a timing chart for a token ring data transfer;
Fig. 2 is a diagram of a star and ring topology communication system according to an embodiment of the present invention;
Fig. 2B is a diagram of a star and ring topology communication system having multiple isochronous circuitry within a single hub according to an embodiment of the present invention;
Fig. 2C is a diagram of a tier topology communication system according to an embodiment of the present invention;
Fig. 3 is a communication system configured according to an embodiment of the present invention;
Fig. 4 is a block diagram of node circuitry according to an embodiment of the present invention;
Fig. 5 is a block diagram of hub receiver circuitry according to an embodiment of the present invention;
Fig. 6 is a block diagram of a receive interface for non-isochronous data according to an embodiment of the present invention;
Fig. 7 is a diagram of a receive interface for isochronous data and associated hub circuitry according to an embodiment of the present invention;
Fig. 8 is a block diagram of a hub transmit interface for non-isochronous data according to an embodiment of the present invention;
Fig. 9 is a block diagram of a hub transmitter interface for non-isochronous data according to an embodiment of the present invention;
Fig. 10 is a timing chart for coordinating data transfers according to an embodiment of the present invention;
Fig. 11 is a block diagram of node circuitry having a delay circuit according to an embodiment of the present invention;
Fig. 12 is a block diagram of a hub buffering system useful for correcting data skew according to an embodiment of the present invention;
Fig. 13 is a block diagram of a node buffering system useful for correcting data skew according to an embodiment of the present invention;
Table I is a tabulation of a time-division multiplexing scheme for multiplexing data streams according to an embodiment of the present invention; and
Table II lists a form of four/five encoding according to an embodiment of the present invention.

## DETAILED DESCRIPTION OF THE PREFERRED EMBODIMENT

The detailed description of this invention is given in the context of a data transfer system that supports both non-isochronous and isochronous communication. The description provided herein therefore enables a discussion of the invention in network systems employed for:

1) transfers between a non-isochronous source and non-isochronous sink connected to the same hub; and
2) transfers between an isochronous source and an isochronous sink connected to the same hub.

The description therefore illustrates several of the more common situations in which the invention might be used.

General Overview of System Operation

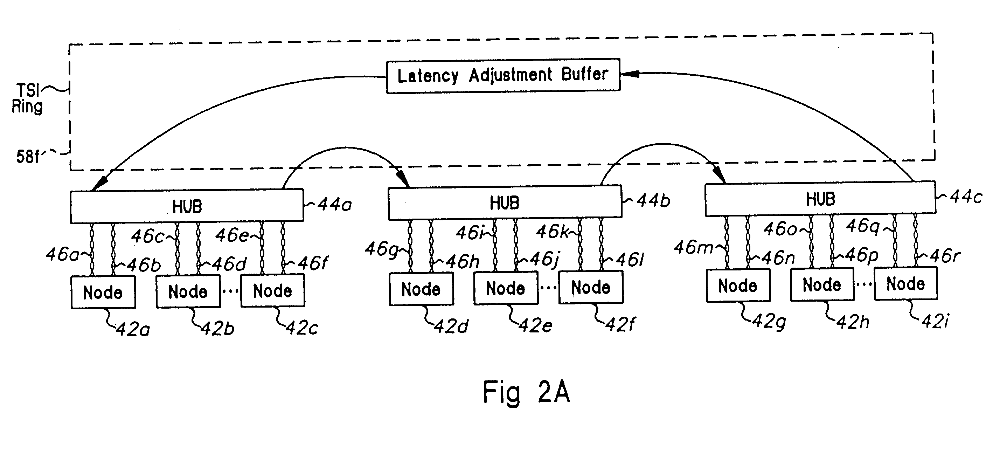

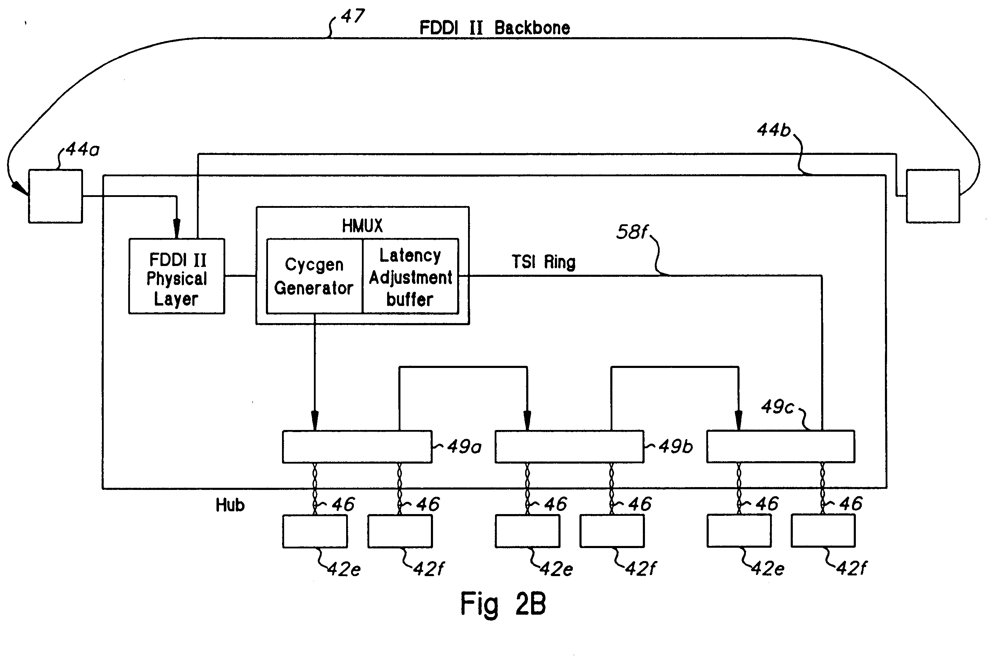

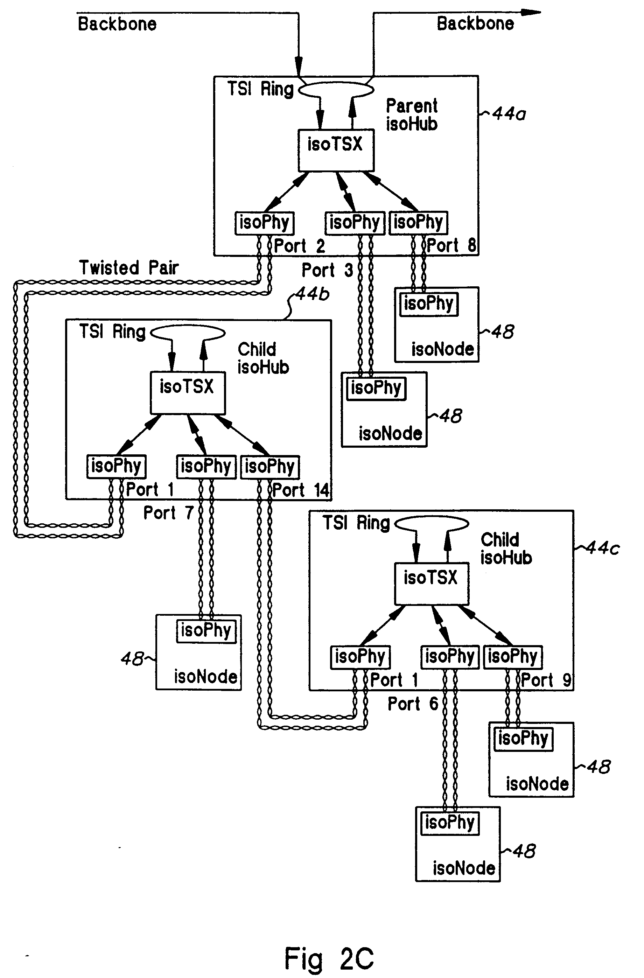

Pending application Serial No. _____, Attorney Docket No. 8332-314/NS-2023, titled "Network for Data Communication with Isochronous Capability", filed the same day herein and incorporated by reference, describes a data communication system for isochronous data that can be configured in a star-topology and interconnected in a ring or tree topology. Such a system is shown in Figs. 2A, 2B or 2C. In the configuration depicted in Fig. 2A, the hubs are connected in a ring-topology with first hub 44a sending data to the second hub 44b, the second hub 44b sending data to the third hub 44c, the third hub sending data back to the first hub 44a. The inter-hub connections over a Time Slot Interchange (TSI) ring 58f. In one embodiment, an FDDI-II system can be used as the TSI ring 58f. Fig. 2B shows hubs 44a, 44b and 44c arranged in a star and ring topology having multiple isochronous circuitry within a single hub. Fig. 2C shows a tree topology communication system. The parent hub 44a connects to a backbone. Hub 44b operates as a child hub of parent hub 44a and is attached at port 2 of hub 44a. Child hub 44a cascades from child hub 44b.

The star and ring topology includes a plurality of nodes 42a, 42b, 42c attached to a single hub operating on the high bandwidth bus. The exact number of nodes varies depending on the data transmission needs and objectives of the system. Each of the nodes 42a-42c can include various types of sources and sinks such as strictly isochronous sources and sinks, strictly non-isochronous sources/sinks or both isochronous and non-isochronous sources and sinks. Data links comprising physical data transmission media, such as one-way twisted pair wires 46a-46r, couple each node to one of hubs 44a-44c.

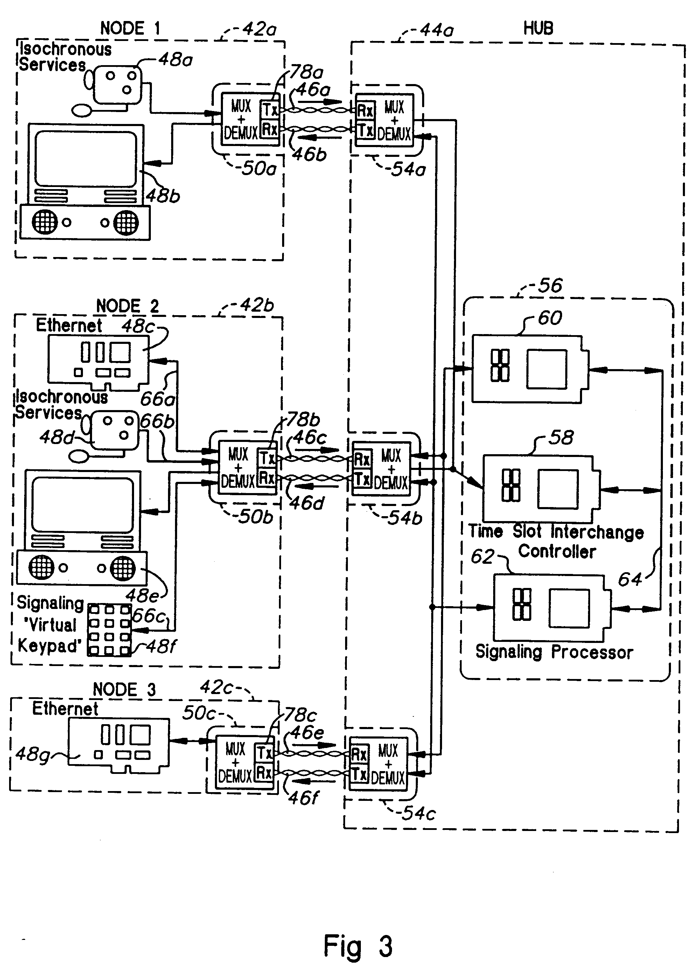

Fig. 3 shows hub 44a and associated nodes 42a-42c in greater detail. Fig. 3 may, by itself, form a complete star topology system. Each node 42a, 42b, 42c includes circuitry 50a, 50b, 50c. Circuitry 50a-c receives data, for conversion to a form suitable for transmission onto the physical media 46a, 46c, 46e; and receives signals from the physical media 46b, 46d, 46f for conversion to a form suitable for use by the data sinks.

Hub 44a includes circuitry 54a, 54b, 54c for receiving data from the physical media 46a, 46c, 46e; separating the isochronous-sourced data from the non-isochronous-sourced data and the D channel and maintenance channel data; and converting separated data into a form suitable for handling by downstream hub circuitry 56. In the depicted embodiment the separated isochronous-sourced data is provided to isochronous switching circuitry such as a time slot interchange controller 58 for placing the data on a TSI bus so that it can be transported to and retrieved by other equivalent circuitry 300b, 300c in the hub for transmission to various destination nodes 303b-f to other hubs. The separated non-isochronous data is provided to circuitry 60 configured to convey the non-isochronous data for transmission to destination nodes 42a, 42b, 42c. In an embodiment in which non-isochronous-sourced data includes ethernet data, the hub circuitry 60 can be a standard ethernet repeater processor. In this way, the system can be at least partially backwards-compatible with previous ethernet hub systems.

The D channel and maintenance data is provided to a signaling processor 62. Signaling processor 62 performs various maintenance and control functions such as identifying and alerting users of error conditions, and setting up requested calls, i.e. source/destination paths e.g. by communicating with the isochronous and non-isochronous controllers 58, 60, e.g. over data path 64.

The operation of the components described above may be understood by describing the transfer of data from video camera, isochronous source, 48d to isochronous sink 48b and from Ethernet Mac, non-isochronous source 48c to non-isochronous sink 48g. Data sent from isochronous device 48d is a continuous stream of digitized data having, for example, a rate equal to the American "T1" standard of 1.544M6PS. Data output from the ethernet MAC 48c is provided at the standard 10BASE-T ethernet rate of 10Mb/sec. D channel data is provided either as part of the output from the ethernet MAC 48c or, for example, from the virtual key pad 48f at a variable data rate, such as a rate not exceeding about 64Kb/sec.

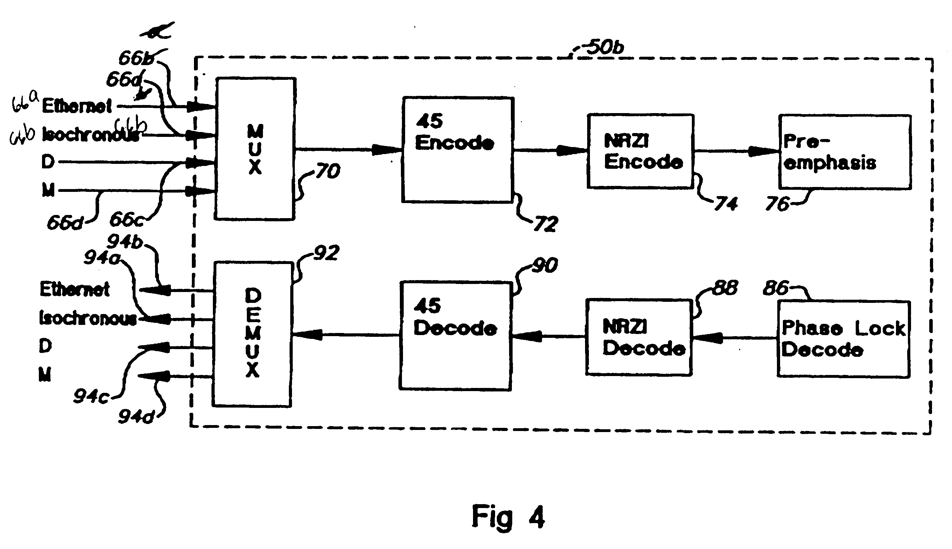

Lines 66a, 66b, 66c carry the data streams from sources 48d and 48c to node circuitry 50b. Fig. 4 shows circuitry 50b in greater detail. Node circuitry 50b comprises hardware that operates on the incoming data stream to enable efficient, compatible transmission between the data source and destination. A multiplexer 70 time-division multiplexes the incoming data on a four-bit basis using a repeating series of frames or templates. In this embodiment, the frames are repeated every 125 micro seconds.

Table I tabulates a scheme for time-division multiplexing the various data streams, additional data and control bytes. Each symbol in Table I represents four bits of data and therefore every group of two symbols represents one 8-bit byte of data. In Table I, E represents four bits of data from the ethernet stream 66a, B designates four bits of data from the isochronous stream 66b and D represents four bits of data from the signaling or D channel stream 66c. M represents maintenance data, which preferably is provided by circuitry 50b. In addition, certain byte-length patterns are provided. JK represents a frame synchronization pattern and EM (the first two bytes of block three in Table I) represents an ethernet "pad" followed by a maintenance byte.

As seen in Table I, each frame contains 256 bytes which can be considered in thirty-two groups of eight bytes each, or four blocks of sixty-four bytes each. For a data rate output from the isochronous source 48d of 1.544Mb/sec. The frame structure described provides an isochronous bandwidth capability of 6.144Mb/sec. Thus, the single isochronous source 48b in the present example can be entirely accommodated using only 48 of the 192 "B" symbols per frame. A basic rate ISDN Channel could be supported by using three 64Kb/s slots within the isochronous channel. Thus, a variety of isochronous sources may be allocated among the available isochronous bandwidth. The frame structure is described more thoroughly in commonly-assigned application Serial No. (Attorney File No. 8332-315/NS-2024), titled "Network for Transmitting Isochronous-Source Data with a Frame Structure", filed on even date herewith and incorporated herein by reference. Frame structures other than that described could be used to provide an allocation of bandwidth suited for the particular purpose.

The time-multiplexed data is then encoded by an encoder 72 to maintain the AC balance of the cable which can be potentially upset by an extended string of binary zeros. In the depicted embodiment, the encoder performs four/five encoding. One particular form of four/five encoding, conforming partially to the ANSII X3T9.5 standard, is described by Table II. These patterns, when properly combined, have a maximum of three bit times with no transition. The encoding scheme depicted in Table II is described in greater detail in commonly-assigned application Serial No. (Attorney File No. 8332-316/NS-2022), titled "Frame-Based Transmission of Data", filed on even date herewith and incorporated herein by reference.

The results of the four/five encoding is then further encoded by encoder 74 of Fig. 4 using a non-return to zero, inverted (NRZI) scheme. The four/five-NRZI encoding is particularly useful in networks in which a non-isochronous source is a 10BASE-T ethernet source because the encoding provides for transmission at a signaling rate substantially compatible with the data rates provided and expected by the ethernet MAC. Other types of encoding or decoding, however, can also be used.

After encoding, the data is sent to pre-emphasis circuitry 76 and to a transmitter or driver 78b. Pre-emphasis circuitry 76 compensates the signal transmitted onto the physical medium to reduce jitter. The signal is then transmitted over the physical medium 46c to hub 44a which can include twisted pair, coaxial or fiber optic cable.

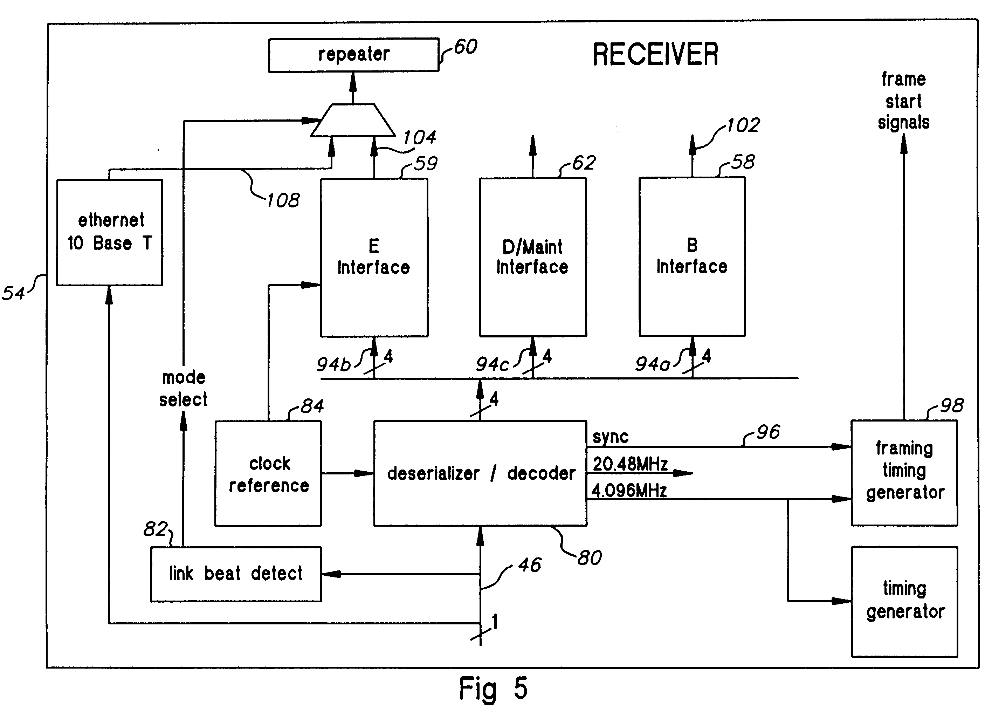

Hub 44a as seen in Fig. 3 comprises a plurality of circuit devices 54a, 54b, 54c, each one coupled to one of nodes 42a, 42b, 42c by physical media 46. As depicted in Fig. 5, the data transmitted over the physical media 46 arrives serially at a de-serializer/decoder 80. De-serializer/decoder 80 includes circuitry which is functionally an inverse of the multiplexing/encoding circuitry described above and operates to decode the four/five NRZI encoding and to separate the isochronous and non-isochronous sourced data. De-serializer/ decoder 80 also outputs a synchronization signal, derived from the JK frame synchronization symbols 96 for use by a framing timing generator 98. Link detect circuitry 82 also receives the data from the physical media 46 for detection of the mode in which the node is operating (e.g. 10BASE-T, isochronous ethernet or isochronous) and outputting a mode select signal, as described more fully in commonly-assigned application Serial No. (Attorney File No. 8332-319/NS-2027, titled "Network Link Endpoint Capability Detection," filed on even date herewith and incorporated herein by reference.)

Both the non-isochronous-sourced data 94b and the isochronous-sourced data 94a are made available to the various hub circuitry components 54a, 54b, 54c, as needed for transmission to destination nodes. In one embodiment, the separated isochronous data 94a and non-isochronous data 94b are reconfigured by the respective interfaces 58, 60 to provide isochronous output 102 and non-isochronous output 104 in a form suitable for transmission to the destination nodes. In one embodiment, the non-isochronous data 94b is configured by the E interface 60 so that the output data 104 can be processed by a repeater device for provision to hub circuitry 54 and eventual transmission to destination nodes. As an alternative to using a repeater for the non-isochronous data, packet connections may be linked through media access control layer bridges.

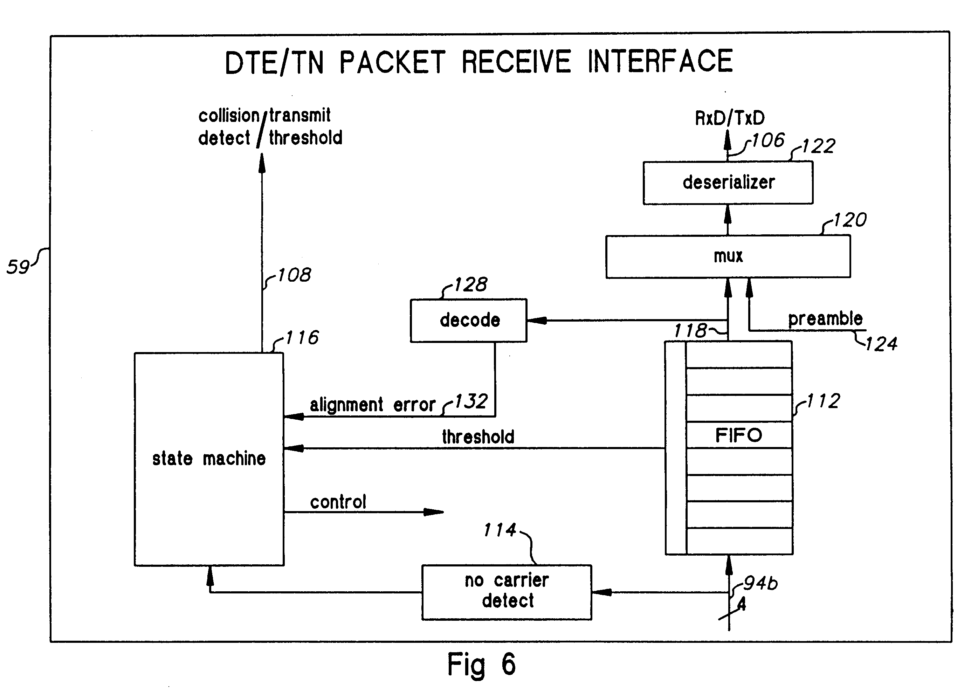

Fig. 6 depicts one implementation of an E interface 59 of a type which will receive the non-isochronous data 94b and provide outputs 106, 108, 110 of a type that can be processed by previously-available repeater circuitry 60. The non-isochronous data is received in a first-in-first-out (FIFO) buffer 112 to smooth out data rates. Circuitry 114 detects "no carrier" symbols, provided to emulate ethernet data packets, used by logic circuitry or state machine 116 to output carrier detect signals. The output 118 from FIFO 112 is provided to a multiplexer 120 and a de-serializer 122 to produce data output 106. Multiplexer 120 can receive a preamble stream 124 to provide the proper preamble bits in the output data 106. Output 118 from FIFO 112 is also provided to decode circuitry 128 to recognize data collision and alignment error symbols and output appropriate signals 130, 132 to state machine 116. Operation and components of the receive interface 59 are described more thoroughly in application Serial No. (Attorney File No. 8332-316/NS-2022), titled "Frame-Based Transmission of Data".

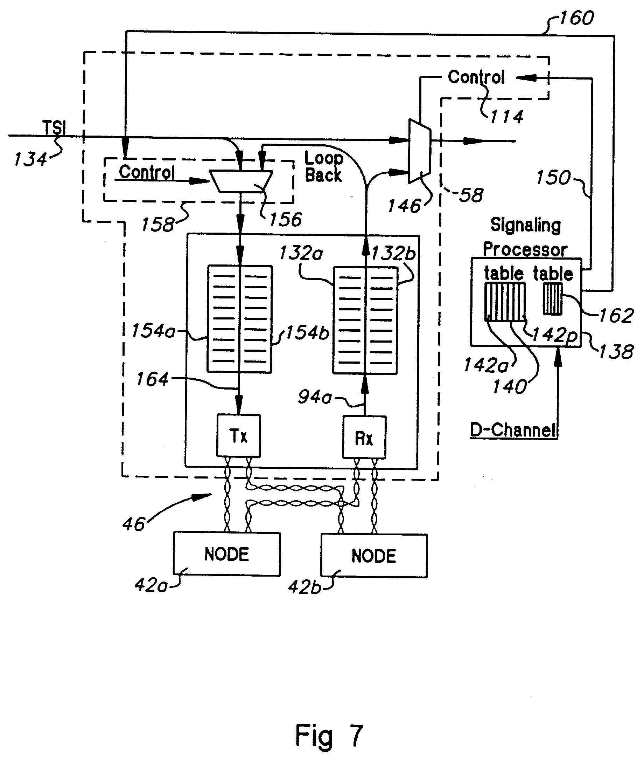

For purposes of the present example, data from isochronous-source 48d (Fig. 7) is assumed transmitted in the first 24 Isochronous bytes of each frame represented by the "B" symbols in block 0 of Table I (i.e. the first forty-eight "B" symbols in the frame structure). Fig. 5 depicts a B interface 58 according to one embodiment of the invention. In the embodiment of Fig. 5, the separated isochronous data 94a is stored in one of two buffers 132a, 132b. The timing of storage in the buffers 132a, 132b is coordinated with the 125 microsecond frame transmission timing so that data 94a from a first frame will be stored in the first buffer 132a during a first period of 125 microseconds and, during the next 125 microsecond period, the isochronous data 94a from the next frame will be stored in the second buffer 132b. In one embodiment, the data can be stored in the buffer 132 in the same order it is received, such that the eight bits represented by the first two "B" symbols in Table I is stored in the first storage location of buffer 132a, that corresponding to the second two "B" symbols in Table I is stored in the second location of buffer 132a and so on. Since the frame structure depicted in Table I contains 96 bytes of isochronous data per frame, each of the buffers 132a, 132b has the capacity to store 96 bytes of data per node supported. After isochronous data from a first frame is stored in buffer 132, during the next 125 microsecond period (while the data from the next frame is being stored in the second buffer 132b) data which was stored in the first buffer 132a is transmitted onto a high bandwidth bus 134. The loading of the buffer 132 is dependent upon the number of nodes supported by hub 44a. Bus 134 has sufficient bandwidth to carry the isochronous data output from a plurality of nodes which are connected to the hub 44a. In an embodiment in which the hub 44a is connected to 16 nodes, the bandwidth of the bus 134 must be sufficient to receive 1,536 bytes of data (i.e. 16 nodes x 96 bytes per node) every 125 microseconds (i.e. every frame). This corresponds to a bandwidth of about 98304 Kb/sec.

Depending upon aspects of the system configuration, such as the number of nodes attached to a hub and the bandwidth dedicated to isochronous data, other embodiments of the invention could be provided with other bandwidths for the TSI bus 134. However, the 98304 Kb/sec bandwidth is particularly useful because it substantially matches the bandwidth employed in FDDI-II, making it particularly easy to port the data on the TSI bus 134 to a TSI ring 58 (Fig. 3) in configurations where the TSI ring 58 is an FDDI-II system.

According to one embodiment, the data is conveyed from the buffer 132 into a time slot on the bus 134 in a time slot interchange fashion. Data carried on TSI bus 134 is transmitted in 125 microsecond time frames divided into 1,536 time slots, each df which has a duration of about 0.08138 microseconds. Each time slot has data and may also have associated control and parity. Thus a byte could represent 10 bits of time slot information. Thus, data from buffer 132a may be placed onto TSI bus 134, by transmitting a given one of the 1,536 bytes stored in 132a on TSI bus 134 at the proper one of the 1,536 time slots of the 125 microsecond frame. Which of the time slots is "proper" depends on the use which is to be made of the data and, in particular, the destination for the data as predetermined in the connection set-up.

The destination for data, in the depicted embodiment, has been pre-established using the D channel information. The D channel information is sent to a signaling processor 138. The D channel information, which includes source, destination, and needed channel data, is used to store values in preferably a look up table 140. In one example, look up table 140 is divided into sixteen sections 142a-142p corresponding to the sixteen nodes associated with the hub circuitry 58 of this example. Each section 142 contains 1,536 bits, corresponding to the 1,536 time slots in a TSI bus time frame. These bits can be used as a control 144 for a multiplexer 146.

In the present example, the twenty-four bytes of data from 48d per 125 microsecond frame are conveyed in the first twenty-four B slots of each 48d frame. Thus, the data from source 48d will be stored in the isochronous data buffer 132. The destination for the isochronous data of this example is monitor 48b. Thus, the 24 B slots of data will be transferred to data buffer 154a and then on the next frame transmitted to 48b in its corresponding first 24 B slots.

The 24 B slots could have been destined for the TSI bus in which case the 24 B slots in 132 would have been switched onto the TSI bus. A bit of the contents of the switch table would have controlled line 150 to control the multiplexer 146 at a rate of one bit for every TSI time slot (i.e., one bit every 0.08138 microseconds). Assuming the first 10 time slots of the TSI bus do not receive the B data which is destined for 9 node attached to another hub, during the first TSI time slot, the multiplexer control 144 will be "0" and no data will be output from the buffer 132 onto bus 134. The multiplexer 146 will merely convey along the TSI bus 134 whatever data was already on the TSI bus in the first time slot. This continues until the 11th time slot of the TSI bus, at which time the B data destined for a node attached to another hub begins to be output onto the TSI bus. During each of the next 24 TSI bus time slots, the control signal for multiplexer 146 will be "1" and a byte of data stored in the appropriate data location of buffer 132 will be output through multiplexer 146 onto the bus 134. Which data location of the buffer 132 is "appropriate" can be determined by a read pointer contained in the switch table. Preferably, buffer 132 is a RAM and the read pointer will be determined according to the contents of the switch table local, on representing the TSI slot time. After completion of conveying the 24 bytes onto the TSI bus, there will be no output from the buffer 132a during subsequent time slots of this TSI frame. In this way, time slots 11 through 35 for a frame on the TSI bus will be filled with data stored in the buffer 132a, i.e. the 24 bytes of data output by the isochronous source 48d.

Fig. 7 also depicts transmission of the isochronous data retrieved from TSI bus 134 to a destination node. The present example requires hub 44a to retrieve the twenty-four bytes of data stored in the first twenty-four even-numbered time slots of the transmitted frame. Data from the TSI ring is retrieved by the B interface 58 associated with sink 48b.

Retrieval from the TSI ring is achieved by a multiplexer 156 controlled by a control signal 158 output over line 160 from the signal processor 138, relying on a Table 162 in a fashion similar to that described for control of multiplexer 146.

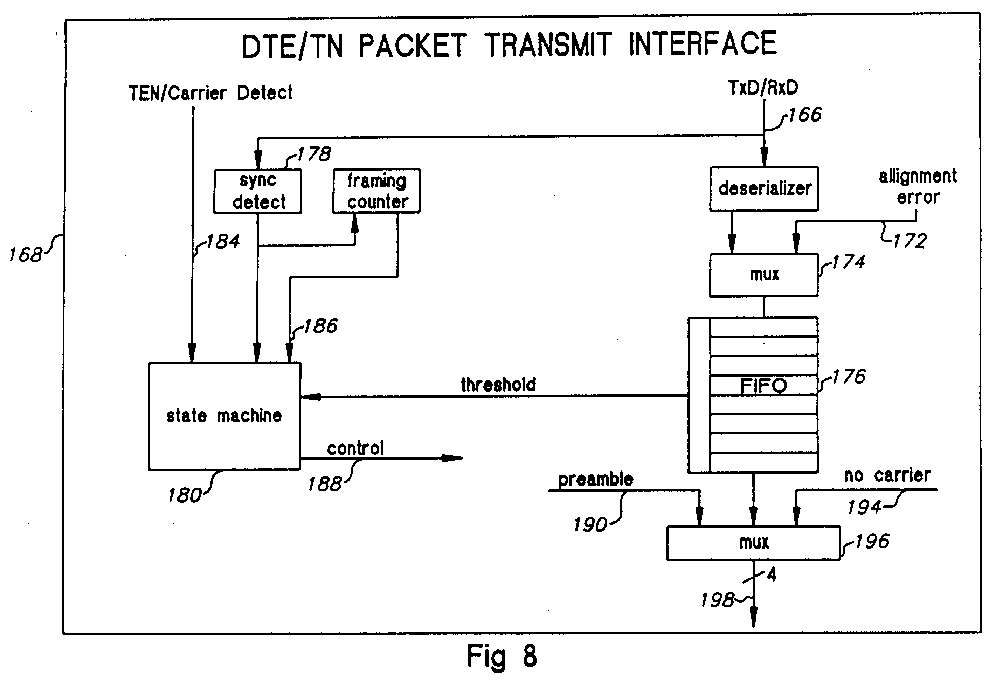

The E interface 60 of hub 44a retrieves the non isochronous data (source 48c) from repeater 60 intended for the non-isochronous sink 48g. An example of an E transmit interface 168 is depicted in Fig. 8. The transmit interface depicted in Fig. 8 is in general, the functional inverse of the E receive interface 60 depicted in Fig. 6. The data 166 is de-serialized and is then combined with any necessary alignment error bits 172 in a multiplexer 174, the output of which is conveyed to a FIFO 176. A parallel interface could also be provided, without the need for the FIFO when in MAC. A sync detect circuit 178 extracts synchronization information from the repeater output 166 for conveying to a state machine 180. State machine 180 also receives carrier detect information 184, framing counter information 186, and provides control signals 188 to FIFO 176. The data output from FIFO 176 is multiplexed with preamble bits 190, and "quiet" (null carrier) bits 194 by a multiplexer 196. Operation of the E transmit interface is described more thoroughly in the application Serial No.          (Attorney File No. 8332-316/NS-2022), titled "Frame-Based Transmission of Data".

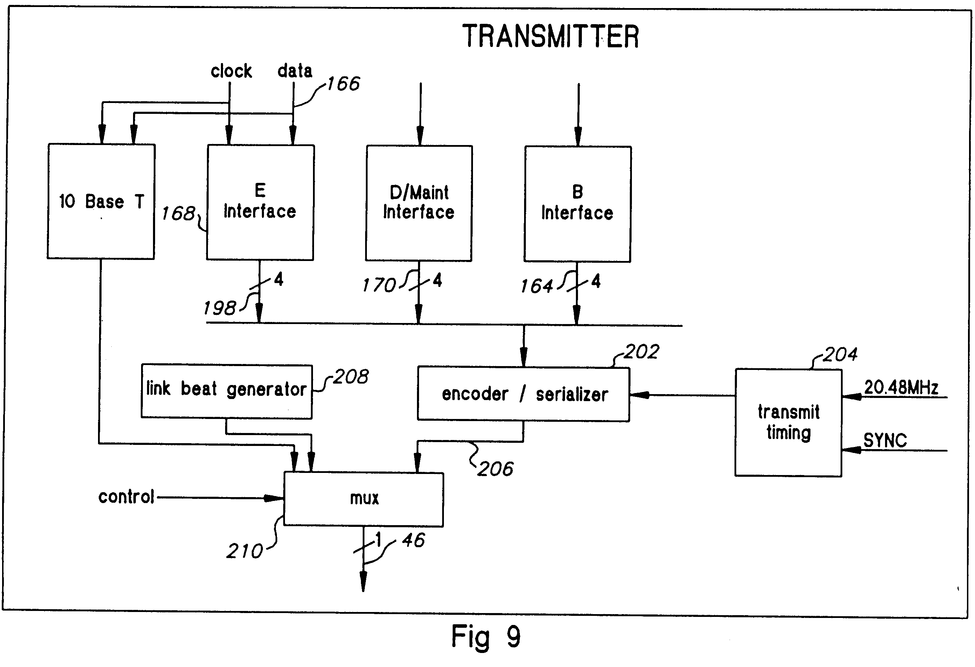

The data 198 output from E transmit interface 168 is provided along with isochronous data output 164 and maintenance and D channel data 170 to encoder serializer circuitry 202, as depicted in Fig. 9. Encoder/serializer 202 is configured substantially like the encoding circuitry depicted in Fig. 4. Specifically, encoder/serializer 202 provides a multiplexer for combining the three streams of data 198, 170, 164, a four/five encoder, an NRZI encoder, and pre-emphasis circuitry. The timing of transmission is controlled by transmit timing circuitry 204. Output 206 from the encoder/serializer is selectively combined with link beats from a link beat generator 208 by multiplexer 210 for purposes of link end point detection, as described more thoroughly in application Serial No.                        (Attorney File No. 8332-319/NS-2027).

Both isochronous and non-isochronous data sent from hub 44a to the nodes 42 is sent in a frame format which is preferably substantially the same as the frame format used for the data sent from the nodes 48 to the hub 44a as described above. At the nodes 42, the circuitry 50 includes devices (Fig. 4) for decoding and de-multiplexing data, similar to that described for performing these functions in the hub, mainly a phase lock decode 86, and NRZI decode 88, a four/five decode 90, and a de-multiplexer 92. Decoded and de-multiplexed data is then delivered to the various data sinks in the nodes 42.

Isochronous FIFOing

In exchange of isochronous data between isochronous sources and sinks, the data exchange is tightly coupled and without perceivable delay in the exchange. For example, data should be provided to a video monitor such that the user does not perceive any delay or jitter in the receipt of data. Also, a telephone conversation may be adversely affected by perceived delays in the conveyance and return of the voice data.

In the data network described herein, the hub receive and transmit portions each comprise two buffers 132a, 132b and 154a, 154b, respectively. Ideally, a first one of each buffer pair begins to load a frame of isochronous data at the start of a cycle. At the start of the next cycle, a second one of each buffer pair fills while the first buffer is emptied. In this fashion, the data exchange is tightly coupled as desired and buffer hardware minimized.

To orchestrate the operations of the hub transmit and receive buffers as just described, the node transmit and receive buffers should operate in synchronism with the hub buffers. For example, the node receive circuit buffers should be ready to accept the data transmitted from the hub buffer at the initiation of a cycle. If the node buffer is not empty and ready to accept a new frame of data, a delay results requiring additional buffering and the possibility of disruptive jitter. The node and hub, however, are separated by physical media 46 which has a finite, but non-zero length. Data traveling between the node and hub therefore requires a finite period of time to traverse this distance. The data is thus almost always skewed in time at these two endpoints.

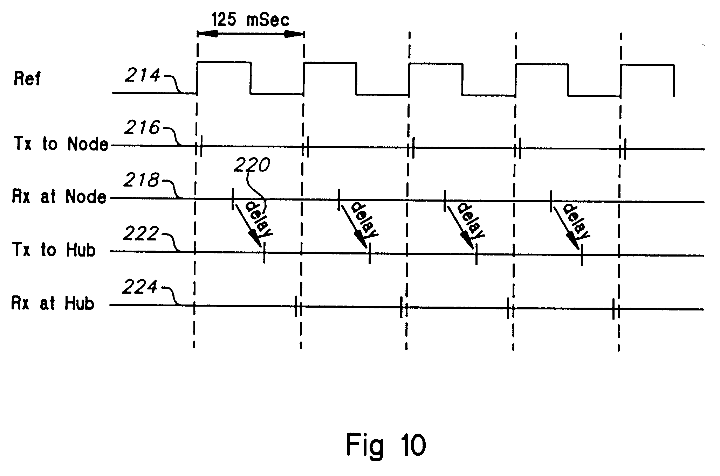

Fig. 10 details a timing scheme to reduce delay and jitter and to enable the buffering operation described in the paragraphs above. As shown in Fig. 10, the timing can be synchronized with a 125 microsecond reference clock signal 214 that provides an ascending clock edge every 125 microseconds. The reference signal can be provided by any of a number of sources, including by synchronization to an external clock reference, such as a reference signal from a wide area network or from a FDDI-II ring. At the beginning of a cycle, hub 44 begins to transmit a frame to the node, as indicated by the timing marks on time line 216. Because of the line delays in the physical media and encoding/decoding delays introduced by the hub and node, the time at which the nodes receive the frame transmitted by the hub lags the time when the frame was sent from the hub as shown by time line 218. A delay 220 is therefore introduced before the node begins transmission of the next frame to hub 222. Delay 220 accounts for the latency introduced by transmission over physical media 46, such that the hub begins receiving the transmitted frame at times 224 approximately coinciding with the rising edges of the clock signals 214.

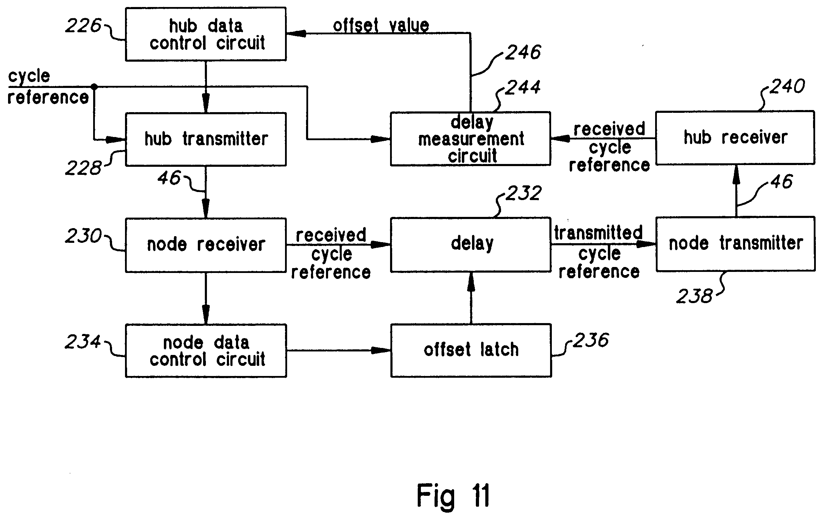

Fig. 11 is a block diagram of delay circuitry useful for aligning the transmitted and received data to compensate for line delays. The delay circuitry of Fig. 11 comprises a data control circuit 226. Control circuit 226 may comprise a finite state machine and adder and/or register circuitry. Circuit 226 may store a known, fixed initial value of delay for each of the nodes coupled to the hub 44. Latch 236 could also be initialized to a known, fixed delay for short cable length of under 100 meters, this and the small fifo is all that is needed. The adjustable delay accommodates longer length, as encountered with fiber optics.

The adjustable delay value is output as a stream of control bits, together with the cycle reference frame, by hub transmitter 228 over physical media 46 to node receiver 230. The cycle reference frame can be supplied by any of a number of possible sources as described above.

At node receiver 230, the cycle reference is extracted and provided to node delay circuit 232. The delay control bits are provided to node data control circuit 234. Node data control circuit 234 may also comprise a state machine, and registers, and/or counter circuits.

The output of node control circuit 234 controls circuit 236. According to one embodiment of the present invention circuit 236 is a memory or counter device that stores the current delay value and outputs this value to delay circuit 232. Delay circuit 232 then waits a period of time, t, as given by the output of circuit 236 before transmitting the cycle reference frame to the node transmitter circuit 238 from the receipt of the received cycle reference. Data from node transmitter 238 is transmitted in phase with the cycle reference frame.

Data transmitted by node transmitter 238 is received by hub receiver 240 over physical media 46. Hub receiver 240 extracts the transmitted cycle reference and outputs this data to delay measurement circuit 244. Delay measurement circuit 244 compares the cycle reference received from the node to the external cycle reference to obtain an offset value 246.

Offset value 246 is provided to hub data control circuit 226. Offset value 246 indicates the delay required to align the received and transmitted data. When the offset value is zero, the received and transmitted frames are in phase. The offset value may be used to increment the initial delay value stored in circuit 226, be added to the current delay value stored in circuit 226, or overwrite the current delay value stored in circuit 226 to obtain a new current delay value for output to the node.

The delay circuitry of the present invention accommodates all lengths of cable up to a cycle reference length of delay. Because the data is multiplexed, the delay circuit of the present invention also has the advantage of accommodating the delays of the many individual isochronous sources coupled to the node.

The delay feature is described in more detail in commonly-assigned application Serial No.

(Attorney File No. 8332-318/NS-2027), titled "Isochronous Link Protocol", filed on even date herewith and incorporated herein by reference.

The timing scheme described above guarantees that the cycle received from the node arrives slightly sooner than the next cycle transmitted from the hub. A small FIFO can be inserted into the hub's received data stream to accurately align the arrival of the cycle. A similar FIFO structure may be used in the node to synchronized data with the received cycle reference until it is to be transmitted.

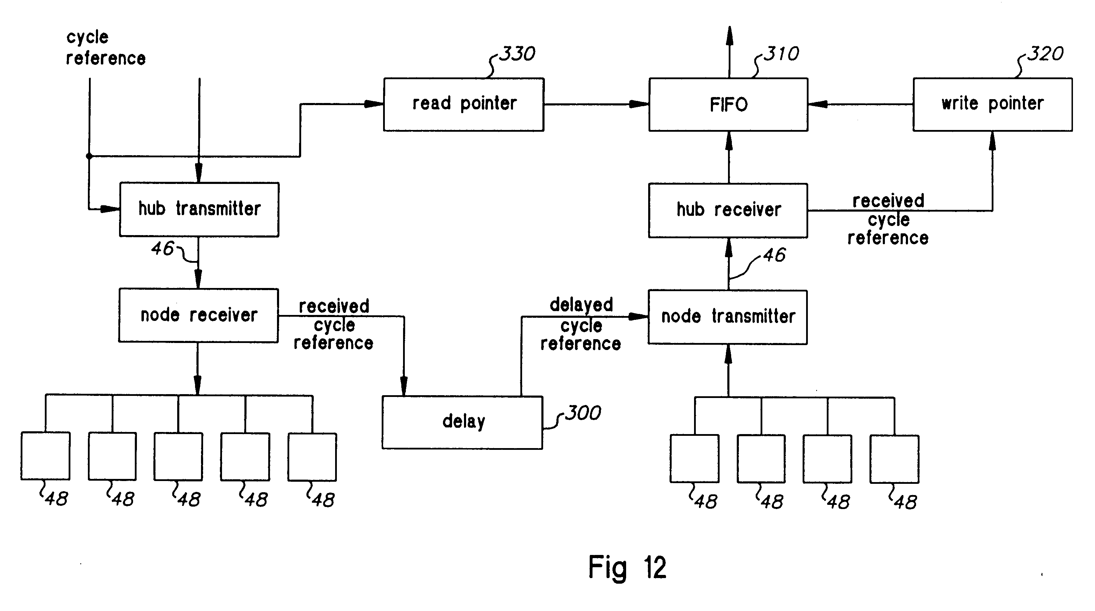

Fig. 12 shows a block diagram of a FIFO system according to an embodiment of the present invention and useful for aligning the cycle times. The system of Fig. 12 includes a delay circuit 300 that may operate as described above in connection with Figs. 10 and 11. The delay circuit functions to delay the start of cycle generation by the node by approximately one cycle time. In the example provided herein and in Fig. 10, this delay is approximately 125 us. As shown in Fig. 10, the delay circuit guarantees that the cycle received at the hub from the node arrives slightly before the next cycle is transmitted from the hub.

Because the data from the node arrives at the hub slightly sooner than the start of the next hub cycle, the data stored in buffer 132a (See Fig. 7) has not yet completely emptied. This buffer is therefore not immediately available for receipt of the incoming data. For this reason, FIFO 310 temporarily stores the incoming data received from the node.

A write pointer 320 directs the filling of FIFO 310. Write pointer 320 is reset by the cycle reference transmitted from the node. Therefore filling of FIFO 320 begins coincident with the receipt of the data from the node. A read pointer 330 directs the downloading of FIFO 310 to buffer 132. Read pointer 330 is reset by the hub internal cycle reference. Therefore, the loading of data into buffer 132 begins as soon as buffer 132 empties. Any delay between the start of data received from the node and the hub internal cycle start may be thus accommodated.

The difference between the node cycle start received by the hub and the hub internal cycle start is a function of the cable length distance between the node and the hub. Each node connects to the hub with a unique cable distance. The cycle delay is thus not a fixed value. For this reason, FIFO 310 should be sized to accommodate the delay introduced by the maximum length of physical media 46, or one cycle length, whichever is larger. In one embodiment of the present invention, FIFO 130 is sized to accommodate the maximum ethernet cable distance of 100 meters, or 200 meters round trip.

When the node is provided with a transmit or receive buffers similar in construction and operation to FIFO of hub 44, the receive and transmit portions of the node can also be synchronized. The synchronization permits the node transmit FIFO to start filling at the start of the received cycle reference and permits the transmit buffer to be emptied at the start of the delayed cycle reference.

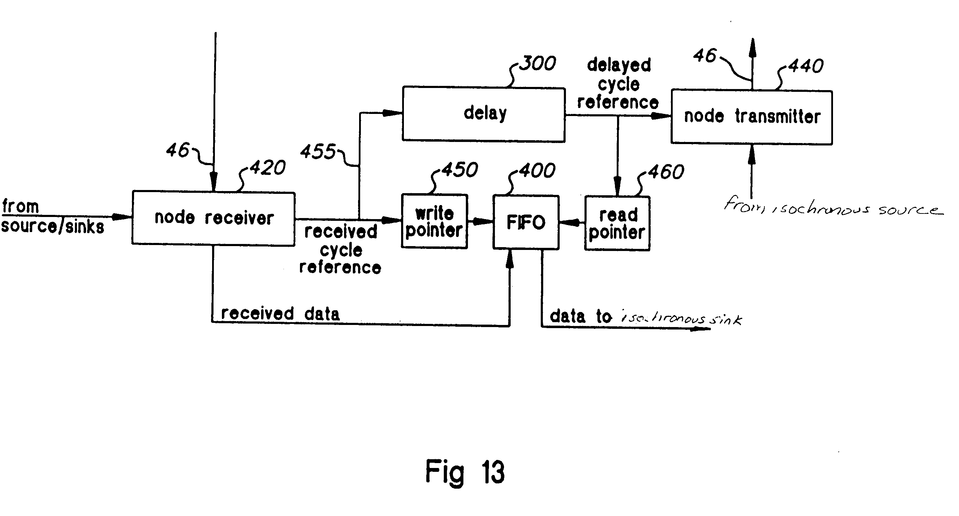

Fig. 13 shows a block diagram of a node buffering architecture according to an embodiment of the present invention. In Fig. 13, a FIFO 400 is inserted in the data path of node transmitter 440. A write pointer 450 directs the filling of FIFO 400. Write pointer 450 is reset by the cycle reference 455 transmitted from the hub or received from another data source connected to the node. Cycle reference 455 may be thought of as the node cycle reference. Therefore filling of FIFO 400 begins coincident with the receipt of the data at the node. A read pointer 460 directs the downloading of FIFO 400. Read pointer 460 receives the delayed cycle reference. Therefore, downloading of FIFO 440 begins coincident with the delayed cycle start. Any delay between the start of data received at the node and the initiation of transmission from the node may be thus accommodated.

Although the present invention has been described by way of preferred embodiments and certain variations and modifications, other variations and modifications can also be used. For example, the FIFO in the node could be in the receive data path as an alternate. For this reason, the invention being defined by the following claims.

## TABLE I

BLOCK 0:

| J | K | E | B | E | B | E | B | E | B | E | B | E | B | E | E | Group0 |
|---|---|---|---|---|---|---|---|---|---|---|---|---|---|---|---|---|
| E | E | E | B | E | B | E | B | E | B | E | B | E | B | E | E | Group1 |
| E | E | E | B | E | B | E | B | E | B | E | B | E | B | E | E | Group2 |
| E | E | E | B | E | B | E | B | E | B | E | B | E | B | E | E | Group3 |
| E | E | E | B | E | B | E | B | E | B | E | B | E | B | E | E | Group4 |
| E | E | E | B | E | B | E | B | E | B | E | B | E | B | E | E | Group5 |
| E | E | E | B | E | B | E | B | E | B | E | B | E | B | E | E | Group6 |
| E | E | E | B | E | B | E | B | E | B | E | B | E | B | E | E | Group7 |

BLOCK 1:

| M | M | E | B | E | B | E | B | E | B | E | B | E | B | E | E | Group8 |
|---|---|---|---|---|---|---|---|---|---|---|---|---|---|---|---|---|
| E | E | E | B | E | B | E | B | E | B | E | B | E | B | E | E | Group9 |
| E | E | E | B | E | B | E | B | E | B | E | B | E | B | E | E | Group10 |
| E | E | E | B | E | B | E | B | E | B | E | B | E | B | E | E | Group11 |
| E | E | E | B | E | B | E | B | E | B | E | B | E | B | E | E | Group12 |
| E | E | E | B | E | B | E | B | E | B | E | B | E | B | E | E | Group13 |
| E | E | E | B | E | B | E | B | E | B | E | B | E | B | E | E | Group14 |
| E | E | E | B | E | B | E | B | E | B | E | B | E | B | E | E | Group15 |

## TABLE I (cont'd)

BLOCK 2:

```
D  D  E  B  E  B  E  B  E  B  E  B  E  B  E  E   Group16
E  E  E  B  E  B  E  B  E  B  E  B  E  B  E  E   Group17
E  E  E  B  E  B  E  B  E  B  E  B  E  B  E  E   Group18
E  E  E  B  E  B  E  B  E  B  E  B  E  B  E  E   Group19
E  E  E  B  E  B  E  B  E  B  E  B  E  B  E  E   Group20
E  E  E  B  E  B  E  B  E  B  E  B  E  B  E  E   Group21
E  E  E  B  E  B  E  B  E  B  E  B  E  B  E  E   Group22
E  E  E  B  E  B  E  B  E  B  E  B  E  B  E  E   Group23


BLOCK 3:

E  M  E  B  E  B  E  B  E  B  E  B  E  B  E  E   Group24
E  E  E  B  E  B  E  B  E  B  E  B  E  B  E  E   Group25
E  E  E  B  E  B  E  B  E  B  E  B  E  B  E  E   Group26
E  E  E  B  E  B  E  B  E  B  E  B  E  B  E  E   Group27
E  E  E  B  E  B  E  B  E  B  E  B  E  B  E  E   Group28
E  E  E  B  E  B  E  B  E  B  E  B  E  B  E  E   Group29
E  E  E  B  E  B  E  B  E  B  E  B  E  B  E  E   Group30
E  E  E  B  E  B  E  B  E  B  E  B  E  B  E  E   Group31


JK = Frame Synchronization Pattern   EM = Ethernet Pad & 4 Maintenance Bits
MM = 8 Maintenance Bits              E  = Ethernet Packet Channel
D  = D Channel                       B  = Isochronous Channel
```

**TABLE II**

| Symbol | Encoded (5 bit) | Decoded (4 bit) | Description |
|---|---|---|---|
| 0 | 11110 | 0000 | Data 0 |
| 1 | 01001 | 0001 | Data 1 |
| 2 | 10100 | 0010 | Data 2 |
| 3 | 10101 | 0011 | Data 3 |
| 4 | 01010 | 0100 | Data 4 |
| 5 | 01011 | 0101 | Data 5 |
| 6 | 01110 | 0110 | Data 6 |
| 7 | 01111 | 0111 | Data 7 |
| 8 | 10010 | 1000 | Data 8 |
| 9 | 10011 | 1001 | Data 9 |
| A | 10110 | 1010 | Data A |
| B | 10111 | 1011 | Data B |
| C | 11010 | 1100 | Data C |
| D | 11011 | 1101 | Data D |
| E | 11100 | 1110 | Data E |
| F | 11101 | 1111 | Data F |
| I | 11111 | 1010 | No Ethernet Carrier |

| | | | |
|---|---|---|---|
| S | 11001 | 0111 | No Ethernet Data |
| V | 01100 | 0010 | Unaligned Data |
| T | 01101 | 0101 | Unassigned |
| J | 11000 | 1101 | Frame Sync Part 1 |
| K | 10001 | 1101 | Frame Sync Part 2 |
| Q | 00000 | 0010 | Invalid |
| H | 00100 | 0001 | Invalid |
| R | 00111 | 0110 | Invalid |
| V | 00001 | 0110 | Invalid |
| V | 00010 | 0010 | Invalid |
| V | 00011 | 0010 | Invalid |
| V | 00101 | 0010 | Invalid |
| V | 00110 | 0010 | Invalid |
| V | 01000 | 0010 | Invalid |
| V | 10000 | 0010 | Invalid |

## Claims

1. In an isochronous data communication system, having a transmitter and a receiver, an apparatus for correcting data skew comprising:

a FIFO having an input coupled to receive data arriving at said receiver;

a FIFO read pointer, coupled to said FIFO and to a receiver cycle reference for controlling emptying of said FIFO in congruence with said receiver cycle reference; and

a FIFO write pointer, coupled to said FIFO and coupled to receive a transmitter cycle reference transmitted by said transmitter, for controlling filling of said FIFO in congruence with said transmitter cycle reference.

2. In an isochronous data communication system, having a hub coupled to a node, a system for correcting data skew comprising:

a hub FIFO having:

(a) an input coupled to receive data arriving at the hub from said node;

(b) an output coupled to an input buffer of the hub;

(c) a FIFO read pointer, coupled to said FIFO and to a hub cycle reference for controlling emptying of said FIFO in congruence with said hub cycle reference; and

(d) a FIFO write pointer, coupled to said FIFO and to receive a delayed cycle reference transmitted by said node and received at the hub, for controlling filling of said FIFO in congruence with said delayed cycle reference; and

a node delay circuit, coupled to receive said hub cycle reference and a cycle delay signal, for delaying said hub cycle reference by a given time interval to obtain said delayed cycle reference.

3. The system of claim 2, further comprising:

means for transferring said hub cycle reference and said cycle delay signal from said hub to said node; and

means for measuring a phase difference between said delayed cycle reference received at said hub and said hub cycle reference to update a value of said cycle delay signal.

11

4. The system of claim 2 further comprising:

a node FIFO having:

(a) an input coupled to receive data arriving at the node;

(b) an output coupled to an isochronous data sink;

(c) a node FIFO read pointer, coupled to said node FIFO and to a delayed cycle reference for controlling emptying of said node FIFO in congruence with said delayed cycle reference; and

(d) a node FIFO write pointer, coupled to said node FIFO and coupled to receive a node cycle reference, for controlling filling of said FIFO in congruence with said node cycle reference;

5. Apparatus for communicating data among a plurality of data sources and sinks, at least a first of said sources and sinks configured to receive or transmit data isochronously and a second of said sources and sinks configured to transmit data non-isochronously, the apparatus comprising:

at least first and second nodes, said first node being coupled to both said first and second of said sources and sinks;

hub circuitry including at least one hub receiver and at least one hub transmitter;

at least first and second data links, said first link coupling said first node with said hub, and said second link coupling said second node with said hub;

a transmitter in said first node for transmitting data to said hub receiver;

a multiplexer in said first node for transmitting data from both of said first and second sources and sinks over said first link, said multiplexer providing a first, dedicated bandwidth for data originating from an isochronous source, including at least said first of said sources and sinks;

a data link in said hub, coupling said hub receiver and said hub transmitter, wherein data received by said hub receiver is provided to said hub transmitter for transmission to at least said second node;

a hub FIFO having:

(a) an input coupled to receive data arriving at the hub from said first node;

(b) an output coupled to an input buffer of the hub;

(c) a hub FIFO read pointer, coupled to said hub FIFO and to a hub cycle reference for controlling emptying of said hub FIFO in congruence with said hub cycle reference; and

(d) a hub FIFO write pointer, coupled to said hub FIFO and to receive a delayed cycle reference transmitted by said node and received at the hub, for controlling filling of said hub FIFO in congruence with said delayed cycle reference.

6. The system of claim 5, further comprising:

means for transferring said hub cycle reference and said cycle delay signal from said hub to said node; and

means for measuring a phase difference between said delayed cycle reference received at said hub and said hub cycle reference to update a value of said cycle delay signal.

7. The system of claim 5, further comprising:

a node FIFO having:

(a) an input coupled to receive data arriving at the node;

(b) an output coupled to an isochronous data sink;

(c) a node FIFO read pointer, coupled to said node FIFO and to a delayed cycle reference for controlling emptying of said node FIFO in congruence with said delayed cycle reference; and

(d) a node FIFO write pointer, coupled to said node FIFO and coupled to receive a node cycle reference, for controlling filling of said FIFO in congruence with said node cycle reference.

EP 0 596 650 A1

Fig 1B

$$\overbrace{\langle \text{PREAMBLE} \rangle\langle \text{HOUSEKEEPING} \rangle\langle \text{DATA} \cdots \langle \text{FRAME END} \rangle}^{22} \cdots \langle \text{PREAMBLE} \rangle\langle \text{HOUSEKEEPING} \rangle\langle \text{DATA} \cdots$$

Fig 1C

$T_x$ TOKEN

$R_x$ TOKEN

DATA

23

Fig 1A

DATA + HOUSEKEEPING · · ·

12                                                                          14

EP 0 596 650 A1

TSI Ring

58f

Latency Adjustment Buffer

HUB ~44a

46a 46c 46e
46b 46d 46f

Node Node ··· Node

42a 42b 42c

HUB ~44b

46g 46i 46k
46h 46j 46l

Node Node ··· Node

42d 42e 42f

HUB ~44c

46m 46o 46q
46n 46p 46r

Node Node ··· Node

42g 42h 42i

Fig 2A

Fig 2B

Backbone

Backbone

TSI Ring

Parent
isoHub

~44a

isoTSX

isoPhy   isoPhy   isoPhy

Port 2   Port 8
Port 3

Twisted Pair

~44b

isoPhy

~48

isoNode

TSI Ring

Child
isoHub

isoTSX

isoPhy   isoPhy   isoPhy

Port 1   Port 14
Port 7

isoPhy

~48

isoNode

TSI Ring

Child
isoHub

~44c

isoTSX

isoPhy   isoPhy   isoPhy

Port 1   Port 9
Port 6

48~

isoPhy

isoNode

isoPhy

~48

isoNode

isoPhy

~48

isoNode

Fig 2C

16

**Fig 3**

EP 0 596 650 A1

**Fig 4**

Fig 5

# DTE/TN PACKET RECEIVE INTERFACE

Fig 6

EP 0 596 650 A1

Fig 7

# DTE/TN PACKET TRANSMIT INTERFACE

TEN/Carrier Detect

TxD/RxD
166

178
sync detect

framing counter

deserializer

allignment error
172

184

186

mux
174

168

state machine
180

threshold

FIFO
176

control
188

preamble
190

no carrier
194

mux
196

4
198

Fig 8

EP 0 596 650 A1

# TRANSMITTER

Fig 9

EP 0 596 650 A1

EP 0 596 650 A1

125 mSec

Ref  *214*

Tx to Node  *216*

*220*

Rx at Node  *218*

delay    delay    delay    delay

Tx to Hub  *222*

Rx at Hub  *224*

Fig 10

EP 0 596 650 A1

```
                                              offset value
226 ┐ ┌──────────────┐  ◄─────────────────────────────┐
    │ │   hub data   │                                 │
      │control circuit│                              246┐
      └──────────────┘                               244┐
            │                                          │
cycle                                                  │
reference ●──────────────────────┐    ┌──────────────┐ │  ┌──────────────┐
    │       ┌──────────────┐     └───►│    delay     │◄┘  │              │ 240
    └──────►│hub transmitter│─────────►│ measurement  │◄───│ hub receiver │
            └──────────────┘          │   circuit    │ received └──────────────┘
228 ┘            │                    └──────────────┘ cycle      │
             46 ┐│                                    reference  46 ┐
                ▼                                                │
230 ┐ ┌──────────────┐  received     ┌──────────────┐ transmitted ┌──────────────┐
    │ │ node receiver│─── cycle ────►│    delay     │── cycle ───►│node transmitter│
      └──────────────┘  reference    └──────────────┘ reference  └──────────────┘
            │                         232┐      ▲                  238 ┘
            ▼                                    │
234 ┐ ┌──────────────┐              ┌──────────────┐ 236
    │ │  node data   │─────────────►│ offset latch │
      │control circuit│             └──────────────┘
      └──────────────┘
```

# Fig 11

Fig 12

EP 0 596 650 A1

Fig 13

EP 0 596 650 A1

**European Patent Office**

## EUROPEAN SEARCH REPORT

Application Number

EP 93 30 8570

### DOCUMENTS CONSIDERED TO BE RELEVANT

| Category | Citation of document with indication, where appropriate, of relevant passages | Relevant to claim | CLASSIFICATION OF THE APPLICATION (Int.Cl.5) |
|---|---|---|---|
| X | US-A-5 113 395 (MURAKAMI ET AL.) * the whole document * | 1 | H04L12/44 H04L12/64 H04J3/06 |
| Y | | 2-7 | |
| Y | EP-A-0 318 332 (BRITISH TELECOMMUNICATIONS) * abstract * | 2-7 | |
| A | | 1 | |

TECHNICAL FIELDS SEARCHED (Int.Cl.5)

H04J
H04L
H04B

The present search report has been drawn up for all claims

| Place of search | Date of completion of the search | Examiner |
|---|---|---|
| THE HAGUE | 28 February 1994 | Mikkelsen, C |